# FASCICULE DE BREVET EUROPEEN

(11) **EP 3 294 433 B1**
(45) Date de publication et mention de la délivrance du brevet: **27.11.2024**
(21) Numéro de dépôt: 16722598.6
(22) Date de dépôt: 04.05.2016
(51) Int. Cl.: B01D 35/143, B01D 46/00, B01D 46/10, B01D 46/42, B01D 46/44, F24F 11/00

(54) **SYSTEME D'EPURATION D'AIR CONTRÔLANT LA QUALITE DE L'AIR DANS PLUSIEURS PIECES D'UN BÂTIMENT**
LUFTREINIGUNGSSYSTEM ZUR STEUERUNG DER LUFTQUALITÄT IN EINER ANZAHL VON RÄUMEN EINES GEBÄUDES
AIR PURIFICATION SYSTEM CONTROLLING THE AIR QUALITY IN A NUMBER OF ROOMS OF A BUILDING

(30) Priorité: 13.05.2015 FR 1554357; 01.12.2015 FR 1561688
(43) Date de publication de la demande: 21.03.2018
(73) Titulaire: Nateosante, 44680 Sainte-Pazanne (FR)
(72) Inventeur: RICCI, Thierry, 44680 Sainte-Pazanne (FR)
(74) Mandataire: Vidon Brevets & Stratégie
(86) Numéro de dépôt international: PCT/EP2016/060000
(87) Numéro de publication internationale: WO 2016/180703

(56) Documents cités:
- WO-A1-01/22325
- WO-A2-2011/022325
- US-A- 5 695 396
- US-A- 5 695 396
- US-A1- 2004 253 918
- US-A1- 2004 253 918
- US-B2- 6 467 696

## Description

### 1. Domaine de l'invention

L'invention concerne un système d'épuration d'air amélioré capable de filtrer l'air dans une pluralité de pièces d'un bâtiment. L'invention concerne plus particulièrement le fait que le système comporte une pluralité de bouches d'entrée et de sortie d'air contrôlées séparément.

### 2. Art antérieur

La présente invention concerne un épurateur d'air. De nos jours, la pollution est de plus en plus importante notamment dans les villes et la qualité de l'air respiré par les populations se détériore. La pollution se présente surtout sous la forme de fumée, poussière, Composé Organique Volatile (COV) dans l'air. Pour améliorer la qualité de l'air d'un local, ses occupants mettent en place des épurateurs d'air chargé de faire baisser le taux de microparticules en suspension. De tels appareils combinent un ventilateur générant un flux d'air passant à travers un filtre pour se débarrasser des microparticules et ainsi le rendre plus sain pour la santé. L'air filtré est exhalé par des ouvertures pratiquées dans la coque.

Selon un premier aspect, l'épurateur est destiné à traiter de façon décentraliser des pièces d'un même bâtiment. Dans ce cas, des bouches d'entrées et/ou de sorties d'air sont placées dans les pièces à traiter et reliées par des gaines à un épurateur collectif. Chaque pièce comporte de préférence une bouche d'entrée et une bouche de sortie, l'air est aspiré d'une bouche, puis traité par un épurateur déporté et repart pour être injecté par une autre bouche dans la pièce.

Toutes les pièces d'un bâtiment ne sont pas forcément occupées et utilisées, et de ce fait la pollution générée par les occupants ou leur utilisation n'est pas la même. Un système classique va traiter de la même manière toutes les pièces. De ce fait, certaines pièces sont parfaitement saines, alors qu'elles ne sont pas occupées, au détriment d'autres pièces qui sont occupés et utilisées. De ce fait, il y a une réelle nécessité à adapter la purification d'air aux pièces qui en ont effectivement besoin.

Selon un autre aspect, l'épurateur se présente sous la forme d'un appareil portable ou accroché à un mur. La mise en marche de ce type d'épurateur s'effectuer à la main, les occupants du local le mettent en marche pendant un certain temps, par exemple en lançant une temporisation. Des modèles d'épurateurs plus performants disposent d'un détecteur de microparticules ou de COV qui détermine en ppm leur taux en suspension dans l'air, les seuils de déclenchement de l'appareil sont par exemple de l'ordre de 50 ppm en ville, ou 30 ppm en campagne.

Au cours de son fonctionnement, le filtre se charge en microparticules et s'encrasse, ce qui nécessite son remplacement ou son nettoyage. Selon une première approximation, l'encrassement augmente proportionnellement au temps d'utilisation, et en se basant sur ce principe, l'épurateur est doté d'un temporisateur qui comptabilise le temps de fonctionnement du ventilateur et qui déclenche une alerte lorsque cette durée atteint une certaine valeur. Mais ce mode de réalisation ne prend pas en compte le fait que selon la pollution de l'air, l'encrassement maximal va intervenir plus ou moins vite.

Les épurateurs sont généralement mis en marche par les occupants lorsqu'ils en ressentent le besoin. La plupart des épurateurs actuels ne disposent que d'un mode de programmation simple, soit par un bouton marche suivi d'une temporisation, soit par un programmateur journalier.

Force est de constater que, en fonction de la qualité de l'air extérieur pénétrant dans le local, ces appareils ne peuvent s'adapter facilement au confort des utilisateurs, et à leurs habitudes. De plus, les occupants du local ne s'informent pas continuellement de l'état du filtre. Lorsque celui-ci est complétement encrassé et qu'il n'y a pas de filtre de rechange disponible, l'appareil est inutilisable tant que le filtre n'a pas été changé ou nettoyé. Le document US2004/253918 décrit un système d'épuration d'air destiné à équiper un bâtiment selon le préambule de la revendication 1.

Cet état de l'art montre qu'il existe un réel besoin d'un système d'épuration performant, qui analyse la qualité de l'air avant de le traiter et qui peut s'adapter aux locaux dont il doit garantir la qualité de l'air. Un tel système d'épuration doit adapter son fonctionnement aux pièces dans lesquelles des occupants sont présents et éviter de traiter des pièces non utilisées. Selon un autre aspect, un épurateur doit prévenir du niveau d'encrassement du filtre afin d'anticiper son changement, et qui s'adapte aux habitudes des occupants du local où il est installé.

### 3. Objectifs de l'invention

L'invention apporte une solution qui ne présente pas les inconvénients décrits plus haut, en proposant un épurateur d'air connecté à un réseau et doté de moyens pour mesurer le niveau d'encrassement du filtre, ainsi que le taux de pollution dans le local.

### 4. Exposé de l'invention

En vue de résoudre au moins les problèmes mentionnés précédemment, la présente invention propose un système d'épuration d'air destiné à équiper un bâtiment comportant un épurateur d'air doté d'un ventilateur couplé à au moins un filtre pour produire de l'air filtré en diminuant son taux en microparticules ou COV ou autre gaz. Le système comporte une pluralité de couples constitués d'une manchette d'entrée et d'une manchette de sortie traversées par un flux d'air propulsé par ledit ventilateur. Le système comporte également une pluralité de couples constitués d'une bouche d'entrée d'air reliée par une gaine à une manchette de sortie pour injecter le flux d'air filtré dans une pièce dudit bâtiment et d'une bouche de sortie reliée par une autre gaine à une manchette de d'entrée pour extraire de l'air à filtrer de cette pièce. Le système d'épuration comporte en outre des capteurs de pollution mesurant le niveau de pollution au niveau de chaque flux d'air entrant et une carte de contrôle déclenchant l'ouverture d'un clapet d'entrée commandant l'entrée d'air au niveau de la manchette d'entrée et d'un clapet de sortie commandant la sortie de l'air au niveau de la manchette de sortie du même couple, l'ouverture desdits clapets étant proportionnel au niveau de pollution mesuré.

De cette manière, il est possible de contrôler très précisément la filtration de l'air de chaque pièce du bâtiment et notamment de ne pas filtrer l'air des pièces inoccupées.

Selon un premier exemple de réalisation, le système d'épuration d'air comporte un module contrôlant la vitesse de rotation du ventilateur, la vitesse étant proportionnelle au moins au niveau de pollution mesuré par lesdits capteurs et du cumul de section ouverte de l'ensemble des clapets d'entrée et de sortie. De cette manière, la puissance fournie au ventilateur est adaptée au flux d'air et au travail d'épuration qu'il doit effectuer.

Selon un autre exemple de réalisation, le système d'épuration d'air comporte une manchette d'entrée pour l'introduction d'un flux d'air venant de l'extérieur du bâtiment, et un clapet pour contrôler le débit du flux d'air traversant cette manchette, l'ouverture du clapet dépendant du taux de gaz carbonique le plus important mesuré dans un des flux d'air entrant dans l'épurateur. De cette manière, il est possible d'injecter un air neuf, chargé d'oxygène à l'intérieur du bâtiment.

Selon un autre exemple de réalisation, le système d'épuration d'air comporte un capteur mesurant le niveau de pollution de l'air venant de l'extérieur, le clapet d'entrée d'air étant fermé si le taux de particules et/ou de COV de l'air extérieur est supérieur au taux le plus important mesuré dans un des flux d'air d'entrée venant d'un pièce au moins du bâtiment. De cette manière, si l'air extérieur est plus chargé en particule et/ou en COV, il n'est pas injecté dans le bâtiment pour ne pas dégrader la qualité de l'air à l'intérieur.

Selon un autre exemple de réalisation, le système d'épuration d'air comporte un moyen d'émission d'un signal sonore et/ou lumineux activé lorsque le taux de particules et/ou de COV de l'air extérieur est supérieur au taux le plus important mesuré dans un des flux d'air d'entrée venant d'un pièce au moins dudit bâtiment. De cette manière, les occupants du bâtiment sont avertis qu'il n'est pas conseillé d'ouvrir les fenêtres, l'air étant plus pollué à l'extérieur.

Selon un autre exemple de réalisation, le système d'épuration d'air comporte un capteur mesurant la température de l'air extérieur, le clapet d'entrée d'air étant fermé si l'écart entre la température intérieure et la température extérieure dépasse une valeur déterminée. De cette manière, le refroidissement de l'air intérieure en hiver et le réchauffement de l'air en été, sont limités.

Selon un autre exemple de réalisation, le système d'épuration d'air comporte une manchette de sortie pour l'extraction d'un flux d'air vers l'extérieur du bâtiment, et un clapet pour contrôler le débit du flux d'air traversant cette manchette, l'ouverture de ce clapet étant commandé de la même manière que le clapet d'entrée pour l'introduction du flux d'air venant de l'extérieur. De cette manière particulièrement simple, une surpression trop importante à l'intérieur du bâtiment est évitée.

Selon un autre exemple de réalisation, le système d'épuration d'air comporte un capteur de pression pour mesurer la pression à l'intérieur du bâtiment, une manchette de sortie pour l'extraction d'un flux d'air vers l'extérieur du bâtiment, et un clapet pour contrôler le débit du flux d'air traversant cette manchette, l'ouverture de ce clapet étant commandé en fonction de la pression mesurée dans le bâtiment. De cette manière, l'épurateur contrôle la surpression générée dans le bâtiment et la limite à une valeur particulière.

Selon un autre exemple de réalisation, le système d'épuration d'air comporte un boitier de contrôle déclenchant la fermeture d'au moins un couple d'un clapet d'entrée et d'un clapet de sortie commandant le flux d'air traversant une pièce du bâtiment, la fermeture étant déclenchée par l'introduction d'une commande d'un utilisateur au niveau d'une interface. De cette manière, les occupants du bâtiment peuvent contrôler pièce par pièce si l'épuration de l'air doit s'effectuer ou non.

Selon un autre exemple de réalisation, l'épurateur comporte une unique manchette d'entrée et une unique manchette de sortie, et en ce que la pluralité de clapets d'entrée, de clapet de sortie et de capteur de pollution sont placés au niveau des bouches d'entrée d'air et de sortie d'air. De cette manière, il suffit de deux gaines une pour l'entrée et l'autre pour la sortie connectées à l'épurateur, limitant ainsi la longueur des gaines et le nombre de connexions.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- la figure 1 présente un bâtiment 1 comportant plusieurs pièces et le système d'épuration selon un exemple de réalisation,
- la figure 2 présente un schéma synoptique d'un épurateur d'air selon un exemple de réalisation,
- la figure 3 présente un schéma des différents composants de la carte électronique équipant l'épurateur selon un exemple de réalisation,
- la figure 4 montre un exemple de synoptique des actions effectuées sur les flux d'air lorsque le système d'épuration est utilisé,
- les figures 5.a et 5.b présentent selon deux angles l'épurateur doté de multiples manchettes selon un exemple préféré de réalisation,
- la figure 6 présente un exemple d'un menu apparaissant sur l'écran du boîtier déporté,
- la figure 7 présente une vue de face d'un épurateur d'air selon un second exemple de réalisation,
- la figure 8 présente une vue de profil d'un épurateur d'air montrant des éléments électroniques internes selon un second exemple de réalisation,
- la figure 9 présente une vue éclatée des éléments mécaniques d'un épurateur d'air selon un second exemple de réalisation,
- les figures 10, 11 et 12 présentent sous divers angles l'épurateur monté selon un second exemple préféré de réalisation,
- la figure 13 présente un schéma des différents composants de la carte électronique et des équipements connectés selon un second exemple de réalisation,
- la figure 14 présente un schéma d'une apparence d'écran présente sur l'afficheur de l'IHM selon un second exemple de réalisation.

### 6. Description d'un mode de réalisation de l'invention

### 6.1 Principe général

L'invention concerne un système d'épuration d'air destiné à équiper un bâtiment comportant un épurateur d'air doté d'un ventilateur couplé à au moins un filtre pour produire de l'air filtré en diminuant son taux en microparticules ou COV ou autre gaz. Le système comporte une pluralité de couples constitués d'une manchette d'entrée et d'une manchette de sortie traversées par un flux d'air propulsé par ledit ventilateur. Le système comporte également une pluralité de couples constitués d'une bouche d'entrée d'air reliée par une gaine à une manchette de sortie pour injecter le flux d'air filtré dans une pièce dudit bâtiment et d'une bouche de sortie reliée par une autre gaine à une manchette de d'entrée pour extraire de l'air à filtrer de cette pièce. Le système d'épuration comporte en outre des capteurs de pollution mesurant le niveau de pollution au niveau de chaque flux d'air entrant et une carte de contrôle déclenchant l'ouverture d'un clapet d'entrée commandant l'entrée d'air au niveau de la manchette d'entrée et d'un clapet de sortie commandant la sortie de l'air au niveau de la manchette de sortie du même couple, l'ouverture desdits clapets étant proportionnel au niveau de pollution mesuré. De cette manière, il est possible de contrôler très précisément la filtration de l'air de chaque pièce du bâtiment et notamment de ne pas filtrer l'air des pièces inoccupées.

### 6.2 Description d'un premier mode de réalisation

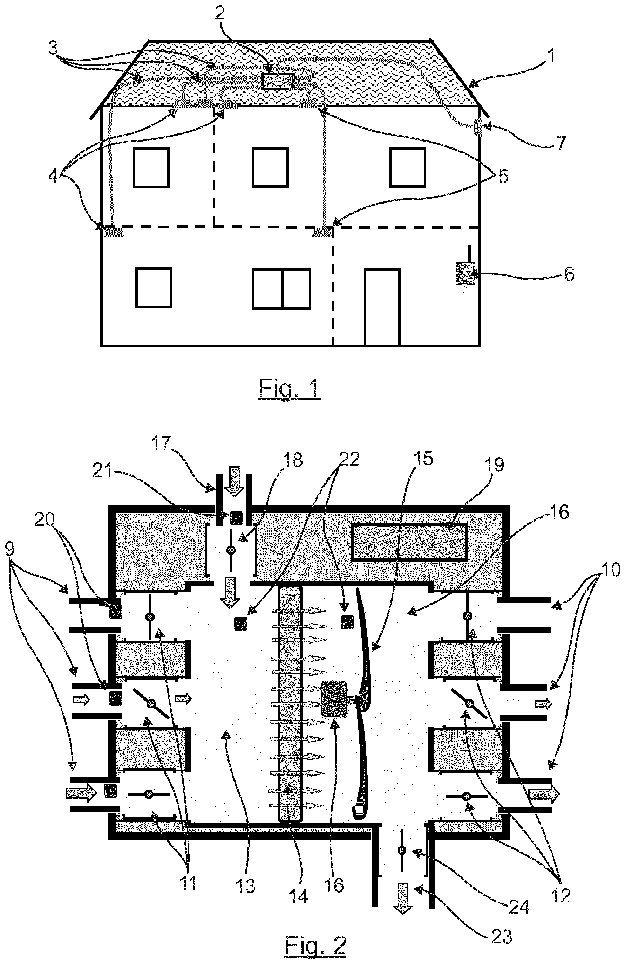

La **Fig. 1** présente un bâtiment 1, typiquement une maison d'habitation ou un immeuble collectif (entreprise, école, commerce) comportant une pluralité de pièces. Le bâtiment dispose d'un épurateur 2 placé dans un local technique, par exemple des combles. Cet épurateur dispose d'une pluralité de bouches d'entrées et autant de bouches de sorties. Chaque couple de bouches est relié par une gaine 3 à une bouche d'entrée 4, et par une autre gaine à une bouche de sortie 5. Un ensemble comportant une bouche d'entrée associée à sa gaine menant l'air vers l'épurateur et une bouche de sortie associée à sa gaine menant l'air de l'épurateur vers la pièce à traiter constitue une boucle de filtrage. Il est préférable d'installer la bouche d'entrée et la bouche de sortie dans la même pièce afin de contrôler finement son niveau de pollution. Il est aussi possible d'installer la bouche d'entrée dans une pièce et la bouche de sortie dans une autre pièce possédant une ouverture pour échanger l'air avec la première pièce. Dans ce cas, le contrôle du niveau de pollution est commun aux deux pièces.

La commande de l'épurateur et sa programmation s'effectuent par un boitier déporté 6, placé de préférence dans une pièce du bâtiment. Le boitier déporté communique avec l'épurateur de préférence par radio, ce qui n'exclut pas une communication filaire. Le système d'épuration dispose également d'une prise d'air extérieur 7 dont nous verrons le rôle par la suite.

La **Fig. 2** présente un schéma synoptique d'un épurateur d'air 2 selon un exemple de réalisation. L'épurateur d'air 2 comporte une pluralité de manchettes d'entrée 9 et de manchette de sorties 10, qui sont deux à deux accouplées, l'air extrait par une manchette de sortie 10 passe dans une pièce à traiter et revient vers l'épurateur par la manchette d'entrée 9 correspondante. Des clapets d'entrée 11 occultent plus ou moins la section des manchettes d'entrée de façon à réguler le débit d'air entrant dans chaque manchette 9. Des clapets de sorties 12 occultent également la section des manchettes de sorties 10 et régulent le débit d'air en sortie. Les clapets 11 et 12 sont animés en rotation par des servomoteurs commandés par un signal électrique. Pour une bonne efficacité du système, les amplitudes des signaux électriques commandant les clapets d'entrées et de sorties de deux manchettes accouplées sont identiques de façon à obtenir le même flux d'air en entrée et en sortie, ce flux traversant une même pièce ou un ensemble de pièces communicantes.

L'intérieur de l'épurateur comporte une chambre aéraulique 13 d'où les manchettes d'entrée 9 et de sortie 10 débouchent. L'air introduit par les manchettes d'entrée traverse un filtre 14 à microparticule ou COV ou autre gaz contenant des composants chimiques et est aspiré par un ventilateur 15 animé en rotation par un moteur 167. Selon les modèles d'épurateurs, le ventilateur aspire l'air et le fait passer à travers le filtre, ou le ventilateur propulse l'air à travers le filtre. Les deux variantes s'appliquent à la présente invention. Le filtre peut être unique ou multiple, les différentes épaisseurs permettant notamment d'arrêter de nombreux types de particules. En sortie du ventilateur, l'air est expulsé par les manchettes de sorties 10 et les gaines 3. D'autres moyens de filtrage sont également possibles, notamment en utilisant la photo-catalyse qui détruit les COV en les décomposant en CO₂ et en H₂O. Selon un perfectionnement, l'épurateur d'air 2 comporte une manchette d'entrée 17 qui permet d'introduire de l'air extérieur venant d'une gaine 3 reliée à la bouche extérieure 7. Un clapet d'entrée 18 occulte plus ou moins la section de cette manchette d'entrée 17 de façon à réguler le débit d'air extérieur entrant dans la chambre aéraulique.

Les tests ont montrés que le fait d'insuffler de l'air venant de l'extérieur dans une maison dont l'étanchéité à l'air est performante peut entraîner une surpression à l'intérieur, provoquant une inefficacité du système d'épuration et un sentiment de gêne chez les occupants. Pour résoudre ce problème, un moyen simple consiste à doter le système d'épuration d'une sortie d'air placée sur un mur extérieur dont l'ouverture est commandée mécaniquement. Si les pressions de part et d'autre du clapet sont égales, alors celui-ci est fermé, sinon le clapet s'ouvre d'une section qui dépend de la différence de pression de l'air entre l'intérieur et l'extérieur du bâtiment.

Cette solution simple si la bouche de sortie d'air extérieur est placée dans une pièce qui n'est pas isolée des flux d'air des boucles de filtrage, sinon les pièces isolées subiront une surpression. Pour éviter cet inconvénient et selon une variante de réalisation, l'épurateur 2 dispose d'une manchette de sortie d'air 23 permettant à l'air en surpression de s'échapper à l'extérieur du bâtiment. Cette manchette 23 comporte aussi son clapet 24 contrôlant le débit d'air la traversant. Selon cette variante, le système d'épuration dispose d'un capteur de pression (non représenté sur les figures) qui mesure la pression de l'air à l'intérieur du bâtiment et un autre capteur de pression situé à l'extérieur. Si l'écart entre a pression mesurée à l'intérieur devient supérieure à la pression extérieure au-delà d'un certain seuil le 10 à 20 millibars par exemple, le clapet 24 est ouvert. Ainsi, une partie de l'air est expulsé vers l'extérieur et ne génère plus une surpression à l'intérieur. Le capteur de pression intérieure peut être placé dans une pièce principale et transmet de préférence ses valeurs en permanence par radio. La mesure de pression de l'air extérieur peut être obtenu en interrogeant un site de météorologie et en demandant la pression atmosphérique du lieu où se trouve le système d'épuration de l'air.

L'épurateur comporte également une carte électronique 19 destinée à traiter les signaux électriques provenant des différents capteurs, à commander les clapets 11, 12, 18 et le moteur 16 et, à communiquer avec les utilisateurs à travers le boitier déporté 6. Des capteurs 20 sont disposés de préférence au niveau des manchettes d'entrée 9 et 17 pour analyser les caractéristiques de l'air introduit dans l'épurateur. Selon une variante, les capteurs sont positionnés sur les bouches d'entrées 4 et 7, et sont alors reliés par un fil longeant la gaine ou communiquent par radio avec la carte électronique 19. Ces capteurs analysent la qualité de l'air extrait d'une pièce en particulier et mesurent la teneur en microparticule, la présence de COV et/ou le taux de gaz carbonique. Le capteur de CO₂ est utilisable pour détecter une présence humaine. Selon un perfectionnement, un détecteur 21 mesurant le niveau de CO₂ est placé dans le flux d'air provenant de l'extérieur. Deux capteurs 22 mesurent la pression différentielle dans la chambre aéraulique 14 d'un coté et de l'autre du filtre 14 afin d'en déduire son niveau d'encrassement.

Selon une variante, le système d'épuration dispose de clapets contrôlant les flux d'air qui sont placés au niveau des bouches 4 et, 5 et 7 disposées dans chaque pièce et sur le mur extérieur. L'épurateur transmet les signaux de commande des clapets soit à l'aide d'un fil de commande qui longe de préférence la gaine, soit par radio. Ce mode de réalisation permet de mesurer plus précisément le niveau de pollution dans la pièce et non au niveau du flux d'air qui la traverse. Dans ce mode de réalisation, l'épurateur n'a plus besoin d'avoir autant de manchettes d'entrée et de sortie, il suffit de raccorder chaque bouche selon son type, soit à la gaine unique pour l'aspiration de l'air, soit à la gaine unique d'injection.

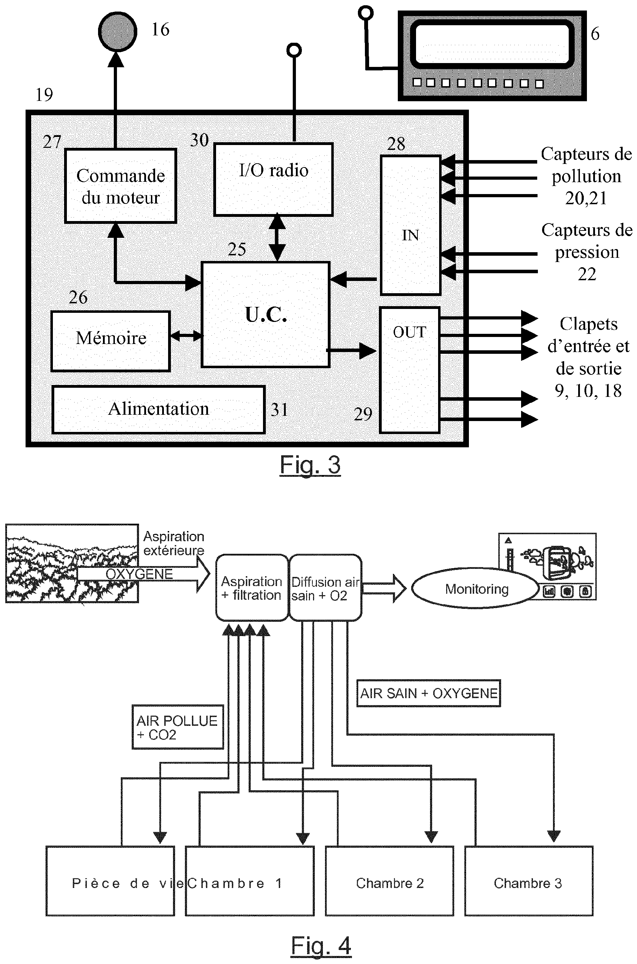

La **Fig. 3** présente un schéma des différents composants de la carte électronique 19 équipant l'épurateur. La carte comporte une Unité Centrale 25 (UC) associée à une mémoire 26 de programme et de données. La mémoire de programme contient en dur un algorithme de régulation de la qualité de l'air dans le bâtiment. L'UC 21 communique avec un module de commande 27 qui contrôle la vitesse du moteur 16 du ventilateur. La carte 19 dispose d'un module d'entrée 28 pour l'acquisition des données analogiques et/ou numériques provenant de capteurs du type pris dans la liste suivante :
- détecteur de gaz carbonique,
- détecteur de microparticules,
- détecteur de COV,
- capteur de pression.

La carte 19 dispose également d'un module de sorties 29 pour émettre des signaux analogiques ou numériques vers les clapets d'entrées et de sorties 9, 10 et 18. La carte électronique 19 communique avec le boitier déporté 6 par un module de communication bidirectionnelle 30 qui intègre un émetteur récepteur radio le cas échéant. La carte 19 dispose d'un module d'alimentation 31 permettant de recevoir l'électricité provenant du secteur électrique ou de tout autre moyen de fourniture d'énergie, en une tension utilisable par les différents composants.

Après avoir présenté les différents éléments du système d'épuration d'air, nous allons maintenant détailler comment ceux-ci coopèrent et montrer le fonctionnement du système.

La **Fig. 4** montre un synoptique des actions effectuées sur les flux d'air lorsque le système d'épuration est utilisé.

Une première fonctionnalité consiste à réguler chaque flux d'air traversant une pièce et un couple de manchettes d'entrée et de sortie, en commandant les deux clapets 10 et 11 en fonction du niveau de pollution mesuré par le capteur 20 correspondant et en fonction du nombre de clapet 11 ouverts, et de leur section ouverte. Plus le niveau de pollution dans une pièce est important, plus les clapets 11 et 12 contrôlant le flux d'air traversant cette pièce sont ouverts de façon à augmenter le flux d'air filtré qui traverse cette pièce. De cette manière, la filtration de l'air de chaque pièce peut être contrôlée finement.

Une seconde fonctionnalité consiste en ce que le moteur du ventilateur dépend de l'ensemble des sections ouvertes des clapets. En d'autres termes, le ventilateur tourne d'autant plus vite, que le nombre de clapets ouverts et que leurs sections ouvertes sont grands. De cette manière, l'énergie pour animer en rotation le ventilateur est adaptée au besoin de filtrage, et ainsi des économies sont réalisées.

Une troisième fonctionnalité consiste à introduire de l'air extérieur lorsque le niveau de gaz carbonique à l'intérieur du bâtiment 1 est trop élevé. Un moyen d'éliminer le CO₂ produit par les habitants consiste à injecter un air extérieur dont la teneur est normalement inférieure. Si le clapet est ouvert, alors le système d'épuration admet l'introduction d'un air extérieur pour améliorer la qualité de l'air intérieur et l'enrichir en Oxygène. Selon un perfectionnement, un capteur 22 placé dans le flux d'air extérieur mesure le niveau de gaz carbonique autour du bâtiment 1. Si le niveau mesuré est supérieur au niveau le plus important mesuré par l'un quelconque des capteurs, alors le clapet 18 est fermé. De cette manière, le système d'épuration fonctionne en circuit fermé c'est à dire, aspire l'air intérieur, le traite et le rejette traité dans le bâtiment. Selon un autre perfectionnement, dans une telle circonstance où le taux de CO₂ à l'extérieur est supérieur à celui à l'intérieur, un message est émis sous la forme d'un signal affiché, et/ou lumineux et/ou sonore au niveau du boitier déporté 6, de façon à prévenir les occupants du bâtiment et les inciter à ne pas ouvrir les fenêtres. Selon un perfectionnement, le niveau d'ouverture des clapets de sortie 12 dépend d'une part du niveau d'ouverture des clapets d'entrée venant des pièces et du niveau d'ouverture du clapet 18 commandant l'introduction de l'air extérieur. Prenons un exemple numérique dans lequel l'épurateur ne dispose pas de manchette de sortie d'air extérieur 23 : le clapet 18 est ouvert à 50 % et 3 clapets d'entrée 11 sont ouverts respectivement à 100 %, 80 % et 50 %, l'Unité Centrale détermine que les trois clapets de sortie 12 associés respectivement aux trois clapets d'entrée 11 sont ouverts de 100 %, (80 % + [50%/3]) = 96 %, et (50 % + [50%/3]) = 66 %.

Si l'épurateur dispose d'une manchette de sortie d'air extérieur 23, alors le système d'épuration possède autant de bouches d'entrée 4 que de bouches de sortie 5. Pour conserver une pression d'air à l'intérieur du bâtiment identique à celle à l'extérieur, il importe que la section ouverte du clapet 18 contrôlant le débit d'entrée d'air extérieur soit égale à la section ouverte du clapet 24 contrôlant le débit d'air sortant à l'extérieur. De cette façon, l'air à l'intérieur ne subit pas de compression. Par conséquent, au sein d'une même boucle de filtrage, la consigne appliquée au clapet d'entrée 11 est identique à celles appliquée au clapet de sortie 12.

Selon une quatrième fonctionnalité, le capteur 22 permet également de mesurer la température. Si le différentiel entre l'intérieur et l'extérieur du bâtiment dépasse un certain seuil, par exemple 10°, alors la carte de contrôle n'autorise pas l'ouverture du clapet 18 pour éviter de trop refroidir l'air dans le bâtiment en hiver ou de trop le réchauffer en été. Avantageusement, le boitier déporté affiche la température extérieure à destination des occupants. Le clapet 18 est cependant ouvert quel que soit la température extérieure si la teneur en CO₂ dépasse un seuil critique qui peut être dangereux pour les occupants.

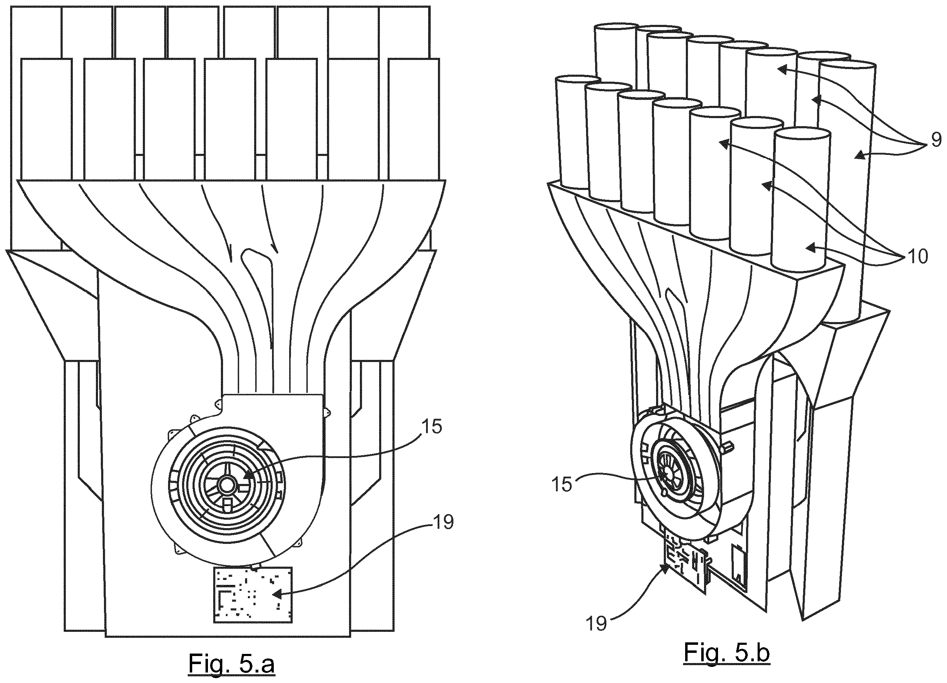

Les Fig. 5.a et 5.b présentent sous divers angles l'épurateur doté de multiples manchettes selon un exemple préféré de réalisation. Les bouches d'entrée 9 et les manchettes de sortie 10 sont regroupées sur le même coté et sont parallèles formant deux rangées d'un ensemble de tuyau d'orgues. Le ventilateur est de type centrifuge générant un flux d'air de 850 m3 à l'heure. L'épurateur présenté comporte huit manchettes d'entrées dont une pour l'entrée de l'air extérieur et sept manchettes de sorties. Le prototype d'épurateur montré sur les Fig. 5.a et 5.B ne possède pas de bouche de sortie vers l'extérieur, ce prototype est utilisable avec une bouche de sortie mécanique, placé dans une pièce du bâtiment et qui s'ouvre dès que le différentiel de pression dépasse un certain seuil.

### . Cet épurateur est équipé des filtres suivants :

- HEPA 14,
- Charbon,
- Ultraviolet,
- Photocatalyse.

Le capteur de particules permet une détection à 0,3 microns, l'épurateur est également équipé d'un détecteur de COV.

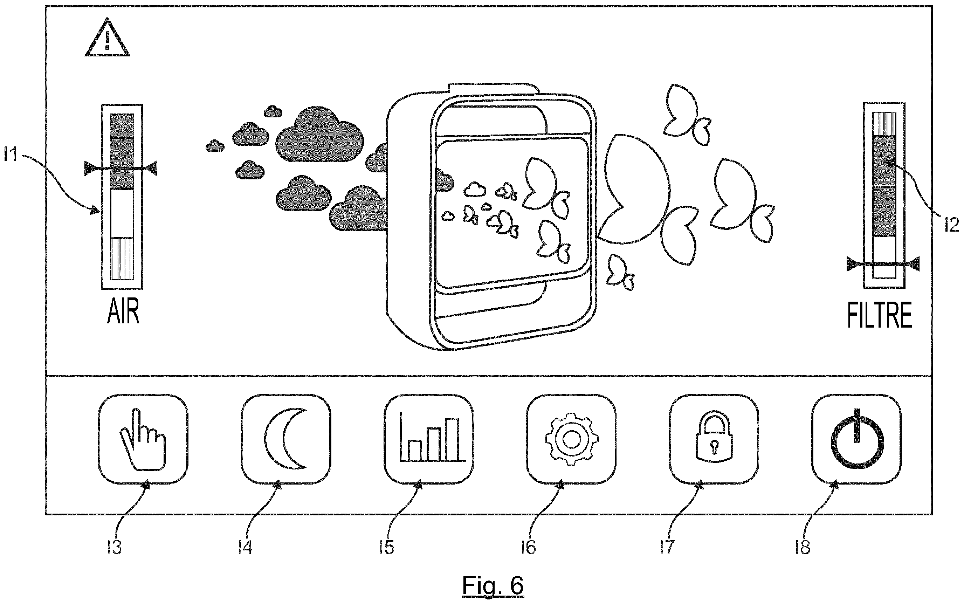

La Fig. 6 présente un exemple d'un menu apparaissant sur l'écran du boîtier déporté 6, qui permet le monitoring et le contrôle à distance de l'épurateur 2. L'écran du boitier déporté 6 possède un écran tactile permettant à l'utilisateur d'interagir avec le système d'épuration. Le menu de la Figure 5 est composé d'icones I dont certains sont interactifs et donne accès à la programmation de paramètres. Un premier icône I1 en forme de bar graph vertical représente la qualité de l'air (COV et particule) actuellement mesurée au niveau des bouches d'entrées, il est représentatif de la qualité de l'air dans le bâtiment. Un second menu 12 également en forme de bar graph vertical informe l'utilisateur du niveau d'encrassement du filtre. Une animation occupe le centre de l'écran où l'on voit des papillons qui traversent l'épurateur mais des nuages noirs qui sont stoppés. Cette animation informe l'utilisateur du bon fonctionnement de l'appareil, la vitesse de déplacement des objets graphiques est proportionnelle à celle du ventilateur. Les autres icônes formant une rangée en bas de l'écran sont interactifs. L'icône 13 permet à l'utilisateur de passer en fonctionnement manuel ou automatique. L'icône 14 permet de rentrer en mode nuit, où le ventilateur est ralenti et où l'éclairage de l'écran est diminué. L'icône 15 donne accès à un histogramme qui présente sur les 12 dernières heures l'évolution de données telles que : niveau de pollution par pièce, débit de l'air, température, ... L'icône I5 permet de paramétrer l'appareil et de programmer son mode de fonctionnement, voici quelques exemples de paramètres accessibles par cette icône :
- niveau de pollution déclenchant l'appareil,
- fermeture des clapets d'entrée et de sortie pour des pièces non utilisées,
- mode de filtration (CO2, COV, ultraviolet, destruction par ozone, destruction des bactéries, des virus, des spores, des moisissures, etc...)
- programmation dans le temps de l'appareil, ...

L'icône I7 permet de verrouiller l'appareil pour éviter que les enfants modifient son fonctionnement. L'icône I8 est le bouton Marche / permet de verrouiller l'appareil pour éviter que les enfants modifient son fonctionnement.

Le taux acceptable de CO2 peut se programmer en choisissant dans la liste suivante : 700ppm, 1000 ppm, 1500 ppm ou 2000 ppm. Avantageusement, l'écran peut afficher pour chaque pièce :
- le niveau de pollution en termes de présence en microparticule et COV,
- le taux de CO2,
- la température,
- le % d'ouverture des clapets d'entrée et de sortie.

De cette façon, les occupants du bâtiment sont mieux informés des conditions de vie à l'intérieur.

### 6.3 Description d'un second mode de réalisation

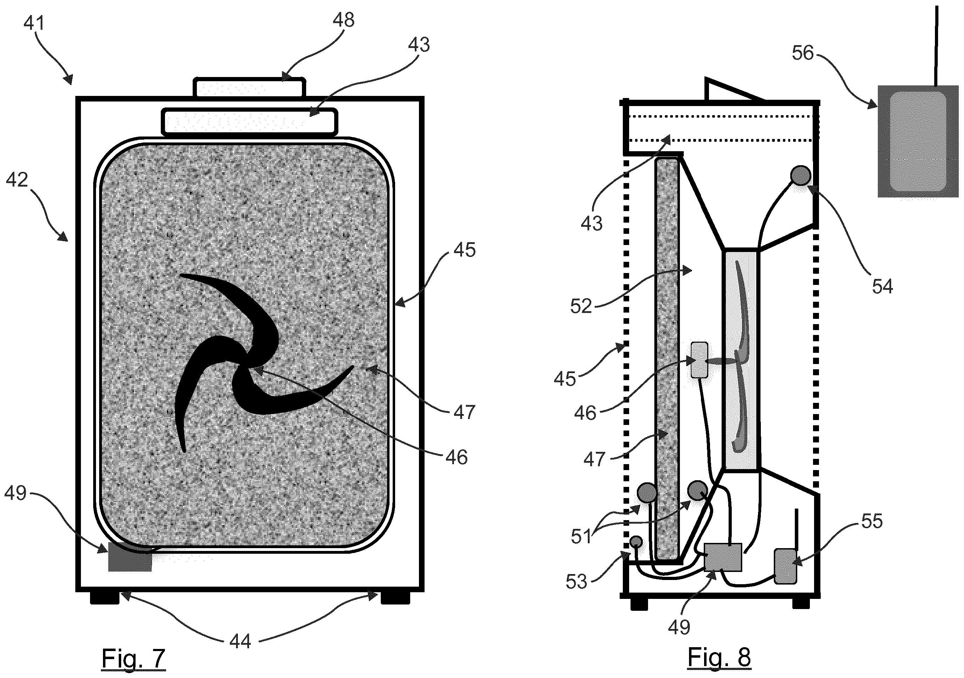

Selon un autre aspect décrit dans le présent document par les **Fig. 7** à **14****,** un épurateur d'air comporte un ventilateur générant un flux d'air passant à travers un filtre pour diminuer le taux en microparticules ou COV ou autre gaz, et une interface Homme / Machine. L'épurateur comporte en outre un capteur mesurant la différence de pression de l'air de chaque coté du filtre pour déterminer son niveau d'encrassement, l'interface Homme / Machine indiquant le niveau d'encrassement du filtre. De cette manière, les occupants du local où se situe l'appareil sont à tout moment informés du niveau d'encrassement du filtre et peuvent prendre leurs dispositions pour le changer ou le nettoyer.

Selon un premier mode de réalisation, l'épurateur d'air comporte un moyen de communication vers un réseau informatique, ce moyen de communication émet un message contenant au moins une indication de la pression mesurée, et reçoit un message à reproduire par l'interface Homme / Machine pour indiquer le niveau d'encrassement du filtre. De cette manière, un serveur distant gère le niveau d'encrassement du filtre et déclenche si besoin une intervention pour un remplacement ou un nettoyage.

Selon un autre mode de réalisation, l'épurateur d'air comporte un moyen d'analyse de l'évolution du niveau d'encrassement du filtre, et un moyen de calcul de la durée de fonctionnement restant avant un encrassement complet du filtre, l'IHM affichant par un message la durée ainsi calculée. De cette manière, l'utilisateur peut profiter de la durée avant l'encrassement complet du filtre pour commander un autre filtre ou programmer une visite de nettoyage de l'appareil.

Selon un autre mode de réalisation, l'épurateur d'air comporte un moyen de comparaison entre le niveau d'encrassement du filtre et un seuil déterminé d'encrassement, l'IHM avertissant par un message que ce seuil est atteint ou dépassé. De cette manière, l'utilisateur peut anticiper un encrassement complet du filtre et le changer avant l'arrêt définitif de l'appareil.

Selon un autre mode de réalisation, l'épurateur d'air comporte un capteur mesurant le niveau de pollution dans l'air ambiant et un moyen de détermination par auto-apprentissage lors d'un premier mode de fonctionnement d'un seuil maximal de pollution de l'air, ce seuil étant le taux de pollution mesurée qui déclenche systématiquement une commande de mise en marche de l'épurateur par un utilisateur, ledit épurateur disposant en outre d'un second mode de fonctionnement déclenchant automatiquement la mise en marche lorsque le niveau de pollution atteint ou dépasse le seuil maximal de pollution ainsi déterminé. De cette manière, l'épurateur détermine une plage de fonctionnement optimale pour les utilisateurs et se programme en conséquence.

Selon un autre mode de réalisation, le moyen de détermination détermine au cours du premier mode de fonctionnement une pluralité de seuils maximaux de pollution associés à autant de moments dans une journée ou une semaine, ledit épurateur mis dans le second mode de fonctionnement déclenchant sans intervention d'utilisateur la mise en marche du ventilateur lorsque le niveau de pollution atteint ou dépasse le seuil maximal de pollution associé au moment de la journée ou de la semaine en cours. De cette manière, la programmation élaborée par l'épurateur est adaptée aux habitudes des utilisateurs lors des moments particuliers de la journée ou de la semaine.

Selon un autre mode de réalisation, l'épurateur d'air comporte un capteur de pollution et une temporisateur comptabilisant le temps au cours duquel le ventilateur fonctionne à puissance maximale, la vitesse du ventilateur est diminuée à l'issue d'une première durée lorsque le niveau de pollution mesurée baisse au cours de cette durée d'au moins une certaine valeur. De cette manière, lors de pics de pollution, l'appareil n'est pas sollicité en permanence.

Selon un autre mode de réalisation, la vitesse du ventilateur est diminuée lorsque la diminution du niveau de pollution reste au dessus de cette valeur après une seconde durée de fonctionnement à vitesse maximale, cette seconde durée étant supérieure à la première durée. Ainsi, l'appareil dispose d'une sécurité pour éviter un trop long fonctionnement à pleine puissance.

Selon un autre aspect, l'invention concerne également un système d'épuration d'un local comprenant un épurateur d'air selon l'une quelconque des revendications précédentes et un serveur distant, caractérisé en ce que ledit épurateur comporte un moyen de communication avec ledit serveur qui transmet au serveur les valeurs fournies par le capteur mesurant la pression de l'air entre le ventilateur et le filtre, le serveur déclenchant une intervention pour changer le filtre lorsque le niveau d'encrassement dépasse une valeur déterminée.

Selon un autre mode de réalisation, le système comprend une pluralité d'épurateurs, le serveur dressant une cartographie des niveaux de pression mesuré lorsque le ventilateur de l'épurateur associé n'est pas mis en marche, ledit serveur dressant une cartographie des pressions mesurées à des fins météorologiques.

Cet autre aspect de l'invention est décrit par un épurateur tel que représenté par la **FIG. 7** qui présente une vue de face d'un épurateur d'air selon un exemple de réalisation. L'épurateur d'air 41 illustré comporte une coque extérieure 42 avec une poignée de préhension 43, située en partie supérieure, la coque étant posée sur des pieds antivibrations 44. La face avant présente une ouïe d'entrée d'air 45 protégée par une grille, l'air est aspiré par un ventilateur 46 comportant des pales en rotation ou par une turbine. Un filtre 47 à microparticule ou COV ou autre gaz contenant des composants chimiques, comme des vapeurs toxiques ou de l'ozone, est placé derrière l'ouïe d'entrée, l'air ressortant du filtre traverse ensuite le ventilateur pour être expulsé par une bouche de sortie. Une Interface Homme Machine (IHM en abrégé) 48 est placée en partie supérieure de l'appareil, cette interface comporte un afficheur et/ou des voyants lumineux, et un clavier qui peut éventuellement se combiner à l'écran sous la forme d'un clavier tactile. Une variante consiste à utiliser un mode de reconnaissance vocale et à commander l'appareil par la voix. L'interface comporte aussi un moyen d'émission sonore, tel qu'un haut-parleur. En partie basse et vu par transparence, l'appareil comporte une carte de contrôle 49 pour gérer le fonctionnement de l'appareil. L'appareil est alimenté par un fil (non représenté) branché sur le secteur électrique du local où il est en fonctionnement.

La **FIG. 8** présente une vue de profil de l'épurateur d'air 41 de la **Fig. 7** montrant notamment des éléments électroniques internes selon un exemple de réalisation. L'air est aspiré par le ventilateur 46 au niveau d'une ouïe d'entrée 45, passe à travers le filtre 47 et ressort par au moins une bouche de sortie 50. Le moteur du ventilateur est contrôlé par une carte de contrôle 49 qui comporte un contrôleur relié à une mémoire de programme exécutable et des modules d'entrées/sorties permettant des liaisons avec différents détecteurs et module externes. Un détecteur de pression différentielle est constitué de deux capteurs de pression 51 placés de chaque coté du filtre et d'un logiciel de traitement calculant la différence entre les deux valeurs mesurées. Un premier capteur est disposé dans une cavité 52 ceinturée de parois et fermée d'un coté par le filtre et de l'autre par les pales du ventilateur, cette chambre 52 étant appelée « chambre aéraulique ». Le second capteur est placé devant le filtre et mesure la pression atmosphérique à l'entrée de l'épurateur. Les détecteurs 51 permettent de calculer la différence de pression due à l'aspiration du flux d'air par le ventilateur et la résistance provoquée par le filtre. Lorsque le filtre vient d'être changé, la résistance est minimale et la différence de pression mesurée est minimale. Au fur et à mesure de son utilisation, le filtre se charge et présente de plus en plus de résistance au flux, l'effort fourni par le ventilateur augmente ainsi que la différence de pression mesurée par les détecteurs 51.

Selon un perfectionnement, l'épurateur d'air dispose également d'un détecteur de particule 53, placé devant le filtre ou en tout autre endroit exposé à l'air du local. Ce second détecteur mesure le taux de microparticules et/ou en COV dans l'air. Selon une variante de réalisation, l'appareil dispose de deux capteurs, l'un pour détecter la teneur en microparticules et l'autre pour détecter la teneur en COV. Selon un perfectionnement, l'appareil dispose également d'un capteur de température 54 pour effectuer des mesures dans l'appareil et ainsi détecter un éventuel échauffement anormal. La carte de contrôle 49 dispose d'un circuit pour commander l'alimentation du moteur du ventilateur, ce circuit mesure également le courant parcouru par ce moteur à des fins de surveillance.

La carte de contrôle 49 est également reliée à l'UI pour recevoir des commandes des occupants du local et pour afficher des indications, et à un module de communication radio bidirectionnel 55, ce module communique un réseau de communication. A travers ce réseau, les occupants du local peuvent recevoir des données provenant de l'épurateur 1 ou lui transmettre des commandes en utilisant leurs téléphones portables 56 ou tout appareil mobile et communiquant. Le réseau permet aussi la communication avec des serveurs distants spécialisés, comme celui de la météorologie, ou un service de maintenance d'appareils.

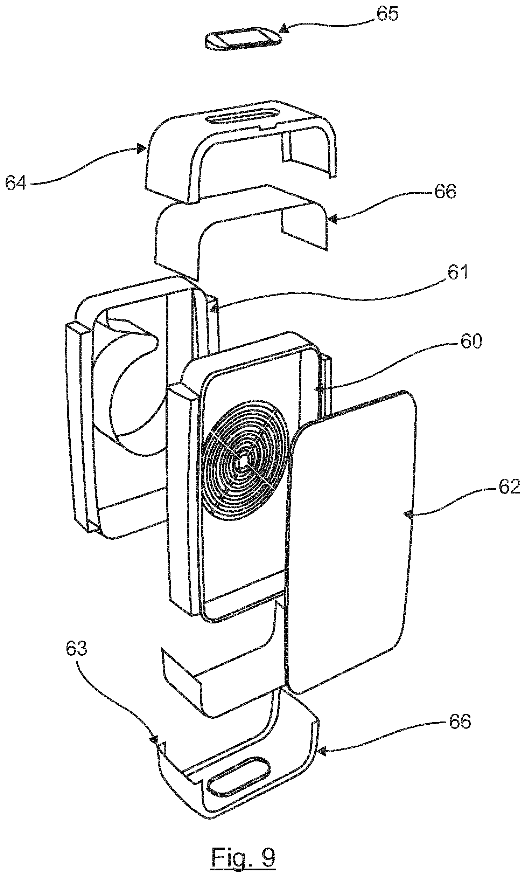

La **Fig. 9** présente une vue éclatée des éléments mécaniques d'un épurateur d'air selon un exemple de réalisation. L'épurateur d'air comporte notamment :
- un carter avant 60,
- un carter arrière 61,
- une face avant 62,
- une arche inférieure 63 servant de pied,
- une arche supérieure 64 servant de poignée de transport et de support pour l'écran,
- un écran tactile 65,
- deux pièces intérieures 66 pour fermer la partie intérieure des arches.

Toutes les pièces sauf les pièces intérieures des arches 66 sont de la même couleur, les pièces 66 sont d'une couleur plus soutenue qui peuvent personnaliser l'appareil. Selon un perfectionnement, les pièces intérieures comportent des lampes (de préférence des LED plates) qui éclairent l'intérieur des arches lorsque l'épurateur fonctionne.

Dans l'exemple illustré, le moyen de génération d'un flux d'air est une turbine logée dans une forme circulaire moulée à l'intérieur du carter arrière.

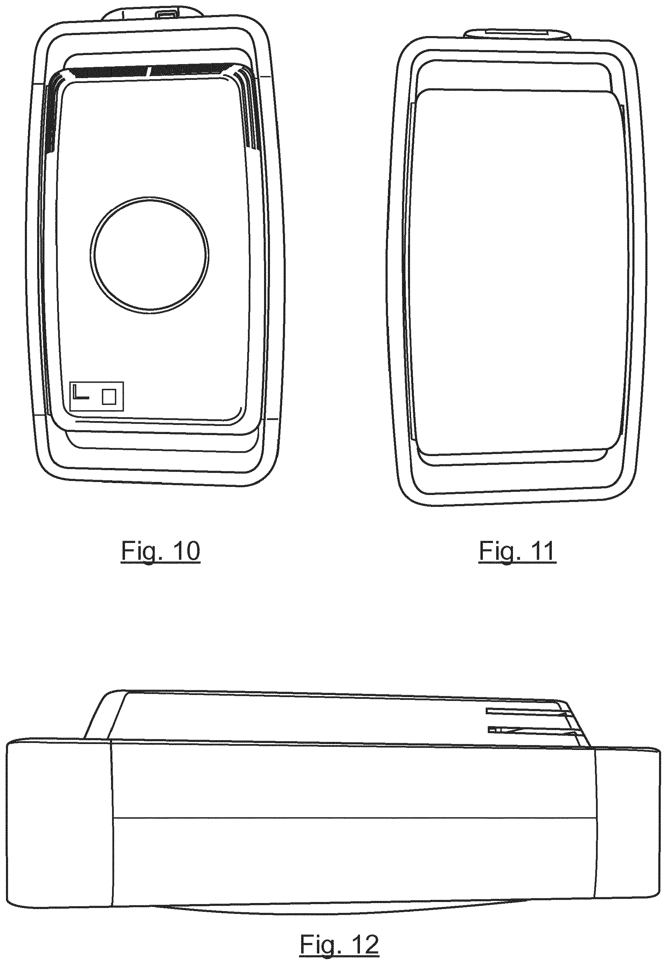

La **Fig. 10** présente une vue arrière de l'épurateur monté selon un exemple préféré de réalisation. On y distingue l'ouïe circulaire d'entrée d'air au centre du carter arrière et la sortie d'air en haut et sur les cotés en partie haute de ce carter arrière.

La **Fig. 11** présente une vue avant de l'épurateur monté selon un exemple préféré de réalisation. On y distingue l'IHM placé sur l'arche supérieure, le dessous de cette arche étant libre pour pouvoir l'utiliser comme poignée de transport.

La **Fig. 12** présente le coté de l'épurateur monté selon un exemple préféré de réalisation. On y distingue les fentes constituant la bouche de sortie de l'air traité, ces fentes sont présentes sur le coté arrière et en position haute de l'appareil.

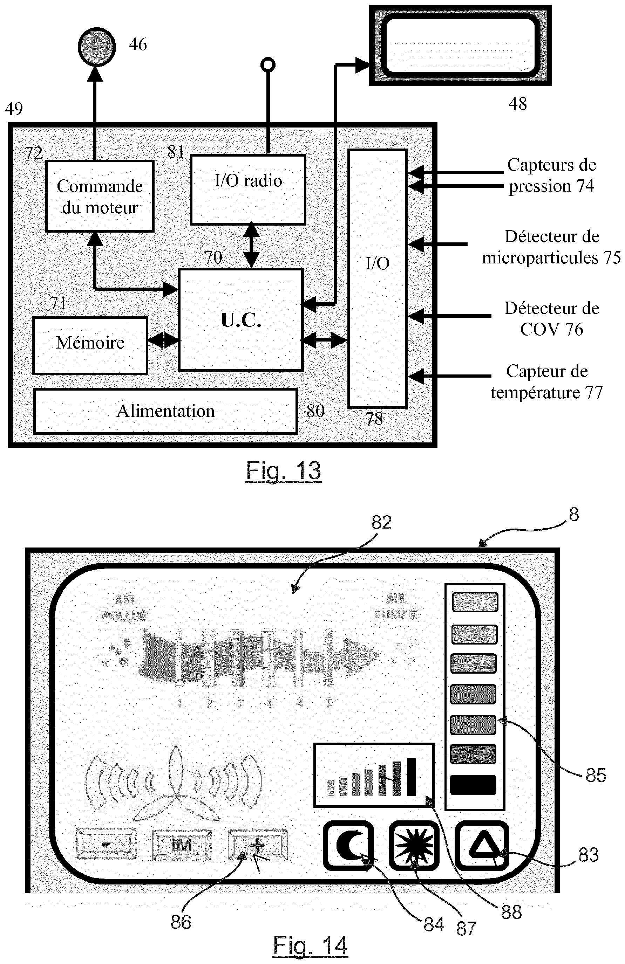

La **Fig. 13** présente un schéma des différents composants de la carte électronique 9 et des équipements connectés. La carte comporte un contrôleur 70 associé à une mémoire 71 de programme et de données. Le contrôleur 70 communique avec un module de commande 72 du moteur du ventilateur 46. Ce module comporte un capteur de courant pour mesurer l'intensité parcourue par le moteur et ainsi détecter une éventuelle surconsommation. La carte 49 dispose d'une interface d'entrée/sortie I/O 73 pour recevoir des données analogiques et/ou numériques provenant des capteurs suivants au moins :
- détecteur de pression 74,
- Détecteur de microparticules 75,
- Détecteur de COV 76,
- capteur de température 77.

Selon la technologie utilisée, la conversion analogique/numérique s'effectue dans le détecteur ou dans l'interface 78. Le contrôleur 70 communique avec l'IHM 48 par une liaison bidirectionnelle permettant de recevoir des commandes des utilisateurs et d'afficher des informations. La carte dispose d'un moyen de communication radio bidirectionnel qui peut être intégré sous la forme d'un sous-ensemble 79 ou déporté dans un module 15 placé à l'intérieur de l'appareil. Ce moyen permet la communication avec une base fixe d'un réseau de communication, par exemple un réseau de téléphonie mobile. La carte dispose d'un module d'alimentation 80 permettant de recevoir l'électricité provenant du secteur électrique ou de tout autre moyen de fourniture d'énergie, en une tension utilisable par les différents composants.

La carte électronique 9 dispose en option d'une interface infra-rouge ou radio courte portée 81 pour communiquer avec une télécommande. Cet équipement est utile lorsque l'appareil n'est pas facilement accessible, car placé en hauteur par exemple.

La **Fig. 14** présente un schéma d'une apparence d'écran présente sur l'afficheur de l'IHM 48. L'écran est tactile et comporte des zones constituant des icônes de commande. En fonctionnement, une vidéo animée apparaît sur une fenêtre 82 de l'écran, cette animation informe l'utilisation du bon fonctionnement de l'appareil. Si le voyant 83 est allumé et clignote, une situation d'alarme intervient, la nature de l'alarme est alors indiqué dans la fenêtre 82, par exemple le message « ***encrassement à 90* %, *filtre à changer rapidement*** » y apparaît et un signal sonore est émis par le buzzer. Une icône 72 active ou inhibe le mode nuit/jour. Une autre icône 84 contrôle l'allumage et l'extinction des lampes placées dans les pièces intérieures des arches.

Une zone 85 représente l'état d'encrassement du filtre sous la forme d'une ligne d'icones représentant une progression de couleurs. Une autre zone 86 permet le contrôle de la vitesse du ventilateur à l'aide de boutons marqué « + » et « - » . L'utilisateur place son doigt sur l'un des icônes pour faire varier la vitesse qui notamment produit un niveau sonore plus ou moins élevé. Un bouton de mode 87 permet de changer le type de paramètre à programmer et notamment de faire varier le niveau de pollution souhaité. Une zone 88 affiche sous la forme d'un bar graph le niveau de pollution actuellement mesuré par les détecteurs 75 et 76. L'utilisateur peut ainsi constater l'efficacité de son appareil et éventuellement changer sa programmation.

Après avoir détaillé les principaux éléments constituant l'épurateur, nous allons maintenant expliquer comment ceux-ci coopèrent.

Lors d'une utilisation normale, l'IHM 48 permet la programmation d'un taux maximum de présence de microparticules dans l'air. Lorsque ce taux est dépassé, le contrôleur met en marche le ventilateur pour filtrer l'air. La vitesse du ventilateur dépend de l'écart entre le taux programmé et le taux mesuré par les détecteurs 75 et 76. Le ventilateur fonctionne d'autant plus vite que le niveau de pollution détecté est élevé, la commande s'effectue à l'aide d'un hystérésis pour ne pas provoquer trop de changement. Pendant toute la durée de fonctionnement, le contrôleur analyse les valeurs fournies par les capteurs pour en déduire l'état de l'appareil et, le cas échéant, déclencher des alarmes.

Lors du changement de filtre ou lors de la première mise en marche de l'appareil, la carte 49 commande le ventilateur à une vitesse de test et mesure la différence de pression générée par le filtre et en déduit la pression avec un filtre neuf. Puis, à des intervalles de temps réguliers, tous les jours par exemple et la nuit de préférence, l'épurateur se remet en mode test pendant une vingtaine de secondes par exemple consistant à effectuer les opérations suivantes :
- commander le ventilateur à la vitesse de test,
- attendre la fin de la durée du mode test pour stabiliser la vitesse du ventilateur,
- mesurer la pression dans la chambre aéraulique 52,
- redonner au ventilateur sa vitesse initiale.

Le contrôleur 70 de la carte 49 possède dans sa mémoire la différence de pression maximum produite par un filtre neuf et un filtre encrassé à 100 %. Le prototype utilisé a fourni les valeurs suivantes : 100 Pa filtre neuf, à 180 Pa encrassé à 100%. Le filtre est donc caractérisé par une différence de pression de ΔPD = 80 Pa mesurée par le détecteur 74. Soit ΔPi la différence de pression mesurée, lorsque le détecteur calcule une valeur de ΔPi = 90% x ΔPD, alors une première alerte est émise indiquant que l'appareil fonctionne toujours mais que le filtre doit être changé. Cette alerte est reproduite par l'IHM 8 sous la forme d'un message affiché ou sonore du type :

### « Encrassement à 90 %, filtre à changer rapidement »

Selon une variante de réalisation, le contrôleur 70 transmet la valeur de pression mesurée par le détecteur 74. Connaissant les caractéristiques du filtre installé sur cet appareil, le serveur distant détermine le pourcentage d'encrassement du filtre et le transmet à des fins de reproduction.

Dans le même temps, l'épurateur émet par radio vers un serveur de maintenance un message indiquant sa référence et son état d'encrassement du filtre. Le serveur de maintenance programme alors une intervention d'un technicien pour changer le filtre ou l'envoi par colis d'un filtre neuf à changer par les occupants du local.

Lorsque la différence de pression maximale est atteinte, le programme coupe l'alimentation du ventilateur et commande l'IHM 8 pour reproduire un message affiché ou sonore du type :

### « Filtre complètement encrassé, filtre à changer impérativement »

Parallèlement à l'affichage, un message est transmis au serveur de maintenance pour lancer une intervention d'un technicien.

Selon un perfectionnement, l'évolution de la différence de pression est enregistrée au fil du temps dans l'appareil ou le serveur de maintenance. Compte tenu de cette évolution, il est possible de déterminer la durée de fonctionnement permettant d'atteindre un encrassement maximal. Pour cela, on considère que le niveau d'encrassement augmente linéairement en fonction de la durée d'utilisation, il est ainsi possible de calculer le temps restant avant l'encrassement complet compte tenu de la vitesse actuelle d'encrassement. Une indication de la durée avant l'encrassement complet est reproduite sur l'IHM 48, par exemple sous la forme du message suivant :

### « Le filtre sera complètement encrassé dans 36 heures »

De cette manière, il est possible d'anticiper l'arrêt complet de l'appareil en changeant le filtre à temps.

Selon un perfectionnement, l'épurateur émet périodiquement vers un serveur de gestion par radio ou à travers un réseau tel qu'Ethernet, un message comportant des informations sur son état telles que :
- Identifiant de l'appareil, par exemple son adresse IP,
- durée de fonctionnement depuis l'émission du dernier message,
- pression différentielle mesurée par le détecteur 74,
- variation du taux de pollution depuis l'émission du dernier message,
- commandes introduites manuellement par les occupants depuis l'émission du dernier message.

Le serveur de gestion calcule des statistiques d'utilisation de l'épurateur et analyse les commandes introduites par les occupants depuis la mise en service de l'appareil, afin de déterminer un seuil « confort » qui est adapté à ces occupants. La détermination du seuil « confort » qui est utilisé dans un fonctionnement automatique s'effectuent par auto-apprentissage : dans un premier mode de fonctionnement qui se déroule au cours d'une certaine période, une semaine par exemple, l'épurateur enregistre le taux de pollution de l'air dans le local et les commandes de l'épurateur introduites par les occupants. A l'issue de cette période (une ou deux semaines) il peut en déduire un seuil de confort, exprimé en ppm (par exemple 30 ppm, ou 50 ppm) au delà duquel les occupants mettent systématiquement en marche l'épurateur. Une fois cette phase d'apprentissage effectuée, un occupant du local peut placé l'épurateur dans un second mode de fonctionnement (indiqué par un voyant allumé par exemple), l'épurateur fonctionne automatiquement et se déclenche lorsque le seuil de confort est dépassé, c'est à dire lorsque le niveau de pollution déclencherait une introduction de commande de mise en marche par un occupant.

L'utilisation des épurateurs a montré que la qualité de l'air à obtenir dépend du moment dans la journée, par exemple, les occupants du local augmentent le niveau de qualité le soir, en effet les personnes sont plus souvent fatigués à ce moment et souhaitent un air de meilleure qualité. Selon un perfectionnement, si un tel comportement est détecté de la part des occupants du local au cours des premiers temps d'utilisation de l'épurateur 1, celui-ci diminue d'une valeur déterminée le seuil de déclenchement du ventilateur, cette valeur déterminée est soit fixe, 5 ppm par exemple, soit un pourcentage de la valeur programmée par l'utilisateur, typiquement 10 %. Selon une variante, les habitudes des occupants sont analysées au cours d'une période plus longue, une semaine par exemple, et la programmation de l'appareil est déterminée au cours de cette période.

L'épurateur émet périodiquement par radio les informations listées précédemment même s'il n'est pas en fonctionnement, c'est à dire si aucune commande du ventilateur n'est intervenue depuis un certain temps. Dans de telles circonstances, les mesures du taux de pollution et de pression obtenues par les détecteurs 74, 75 et 76 sont des mesures de l'environnement à l'endroit où se situe l'appareil. Le serveur rassemble les données provenant d'une pluralité d'épurateurs et dresse une cartographie des pressions météorologiques sur une zone géographique donnée. Ce même serveur peut aussi élaborer une cartographie des taux de pollution mesurée sur cette zone géographique.

Il n'est pas souhaitable de faire fonctionner trop longtemps le ventilateur à pleine vitesse, même lorsque l'écart calculé entre le taux de pollution programmé et le taux mesuré par les détecteurs 75 et 76 est très important. Selon un perfectionnement, à l'issue d'une première durée au cours de laquelle le ventilateur fonctionne à une vitesse haute, typiquement 5 minutes, le niveau de pollution mesurée est analysé. Si ce niveau a baissé de plus d'un certain seuil, alors l'épurateur remplit son office correctement et sa vitesse peut être baissée pour réduire les nuisances sonores. Si ce niveau n'a pas baissé, alors le ventilateur est maintenu en fonctionnement au cours d'une autre première période. Si cette dernière situation perdure, par exemple au cours d'une durée plus longue, typiquement 4 fois la première durée, en l'occurrence 20 minutes, alors la vitesse du ventilateur est réduite de toute façon.

Selon un perfectionnement, l'appareil dispose d'un mode « nuit » activable par une action sur l'icône 84. Lorsque ce mode est activé, la luminosité de l'écran est atténuée et la vitesse du ventilateur est réduite pour éviter d'émettre un niveau sonore trop important.

L'invention n'est pas limitée aux modes de réalisation qui viennent d'être décrits. En particulier, le mode de communication entre l'épurateur et le réseau de communication peut être avec ou sans fil. De plus, le système d'épuration d'air permettant de traiter individuellement chaque pièce peut utiliser le système de détection d'encrassement du filtre décrit par les figures 7 à 14.

## Revendications

1. Système d'épuration d'air destiné à équiper un bâtiment, ledit système comportant un épurateur d'air doté d'un ventilateur (16) couplé à au moins un filtre (7) pour produire de l'air filtré en diminuant son taux en microparticules ou COV ou autre gaz, et une pluralité de couples constitués d'une manchette d'entrée (9) et d'une manchette de sortie (10) traversées par un flux d'air propulsé par ledit ventilateur (16),
selon lequel ledit système comprend au moins une pluralité d'ensembles constituant chacun une boucle de filtrage et constitués d'une bouche de sortie (5) reliée par une gaine (3) à une desdites manchettes d'entrée pour extraire de l'air à filtrer d'une pièce à traiter dudit bâtiment vers l'épurateur et d'une bouche d'entrée d'air (4) reliée par une autre gaine (3) à une desdites manchettes de sortie pour rejeter dans le bâtiment le flux d'air de ladite pièce filtré par l'épurateur de sorte à ce que le système fonctionne en circuit fermé,
selon lequel ledit système comporte des capteurs de pollution (20) adaptés pour mesurer le niveau de pollution au niveau de chaque flux d'air entrant dans les manchettes d'entrée (9) et une carte de contrôle (19) adaptée pour déclencher l'ouverture d'un clapet d'entrée (11) commandant l'entrée d'air au niveau de la manchette d'entrée et d'un clapet de sortie (12) commandant la sortie de l'air au niveau de la manchette de sortie du même couple, l'ouverture desdits clapets d'entrée (11) et de sortie (12) étant proportionnel au niveau de pollution mesuré.
**caractérisé en ce que** ledit comporte en outre un module adapté pour contrôler la vitesse de rotation du ventilateur, la vitesse étant proportionnelle au moins au niveau de pollution mesuré par lesdits capteurs (20) et du cumul de section ouverte de l'ensemble des clapets d'entrée et de sortie.

2. Système d'épuration d'air selon la revendication 1, **caractérisé en ce qu'**il comporte en outre une manchette d'entrée (17) pour l'introduction d'un flux d'air venant de l'extérieur du bâtiment, et un clapet (18) pour contrôler le débit du flux d'air traversant cette manchette (17), l'ouverture du clapet par la carte de contrôle (19) dépendant du taux de gaz carbonique le plus important mesuré dans un des flux d'air entrant dans l'épurateur.

3. Système d'épuration d'air selon la revendication 2, **caractérisé en ce qu'**il comporte un capteur (21) mesurant le niveau de pollution de l'air venant de l'extérieur, le clapet d'entrée d'air (18) étant adapté pour être fermé par la carte de contrôle (19) si le taux de particules et/ou de COV de l'air extérieur est supérieur au taux le plus important mesuré dans un des flux d'air d'entrée venant d'un pièce au moins du bâtiment.

4. Système d'épuration d'air selon la revendication 3, **caractérisé en ce qu'**il comporte un moyen d'émission d'un signal sonore et/ou lumineux activé lorsque le taux de particules et/ou de COV de l'air extérieur est supérieur au taux le plus important mesuré dans un des flux d'air d'entrée venant d'un pièce au moins dudit bâtiment.

5. Système d'épuration d'air selon l'une quelconque des revendications 2 à 4, **caractérisé en ce qu'**il comporte un capteur mesurant la température de l'air extérieur, le clapet d'entrée d'air (18) étant fermé si la température intérieure dépasse la température extérieure d'une valeur déterminée.

6. Système d'épuration d'air selon l'une quelconque des revendications 2 à 5, **caractérisé en ce qu'**il comporte une manchette de sortie (23) pour l'extraction d'un flux d'air vers l'extérieur du bâtiment, et un clapet (24) pour contrôler le débit du flux d'air traversant cette manchette, l'ouverture de ce clapet (24) étant commandé de la même manière que le clapet d'entrée (18) pour l'introduction du flux d'air venant de l'extérieur.

7. Système d'épuration d'air selon l'une quelconque des revendications 2 à 5, **caractérisé en ce qu'**il comporte un capteur de pression pour mesurer la pression à l'intérieur du bâtiment, une manchette de sortie (23) pour l'extraction d'un flux d'air vers l'extérieur du bâtiment, et un clapet (24) pour contrôler le débit du flux d'air traversant cette manchette, l'ouverture de ce clapet (24) étant commandé en fonction de la pression mesurée dans le bâtiment.

8. Système d'épuration d'air selon l'une quelconque des revendications précédentes, **caractérisé en ce qu'**il comporte un boîtier de contrôle (19) déclenchant la fermeture d'au moins un couple d'un clapet d'entrée (11) et d'un clapet de sortie (12) commandant le flux d'air traversant une pièce du bâtiment, la fermeture étant déclenchée par l'introduction d'une commande d'un utilisateur au niveau d'une interface (6).

## Patentansprüche

1. Luftreinigungssystem, das dazu bestimmt ist, ein Gebäude auszustatten, wobei das System einen Luftreiniger, der mit einem Ventilator (16) versehen ist, der mit mindestens einem Filter (7) gekoppelt ist, um gefilterte Luft durch Verminderung ihres Gehalts an Mikropartikeln oder VOC oder anderen Gasen zu erzeugen, und mehrere Paare aufweist, die aus einer Einlassmanschette (9) und einer Auslassmanschette (10) bestehen, die von einem Luftstrom durchquert werden, der von dem Ventilator (16) angetrieben wird,
wobei das System mindestens mehrere Anordnungen aufweist, die jeweils eine Filterschleife bilden und aus einer Auslassöffnung (5), die durch eine Hülle (3) mit einer der Einlassmanschetten verbunden ist, um zu filternde Luft von einem zu behandelnden Raum des Gebäudes in Richtung des Reinigers abzuleiten, und aus einer Lufteinlassöffnung (4) bestehen, die über eine weitere Hülle (3) mit einer der Auslassmanschetten verbunden ist, um den Luftstrom von dem Raum, der vom Luftreiniger gefiltert worden ist, in das Gebäude derart einzuleiten, dass das System in einem geschlossenen Kreislauf funktioniert,
wobei das System Verschmutzungssensoren (20), die geeignet sind, um den Verschmutzungsgrad an jedem Luftstrom zu messen, der in die Einlassmanschetten (9) eintritt, und eine Steuerkarte (19) aufweist, die geeignet ist, um das Öffnen einer Einlassklappe (11), die den Lufteinlass an der Einlassmanschette steuert, und einer Auslassklappe (12), die den Luftauslass an der Auslassmanschette desselben Paares steuert, auszulösen, wobei das Öffnen der Einlassklappe (11) und der Auslassklappe (12) proportional zum gemessenen Verschmutzungsgrad ist,
**dadurch gekennzeichnet, dass** es ferner ein Modul aufweist, das geeignet ist, um die Drehgeschwindigkeit des Ventilators zu steuern, wobei die Drehzahl mindestens proportional zu dem von den Sensoren (20) gemessenen Verschmutzungsgrad und der Kumulierung der offenen Abschnitte der Anordnung der Einlass- und Auslassklappen ist.

2. Luftreinigungssystem nach Anspruch 1, **dadurch gekennzeichnet, dass** es ferner eine Einlassmanschette (17) zum Einleiten eines Luftstroms, der von außerhalb des Gebäudes kommt, und eine Klappe (18) zum Steuern der Durchflussmenge des Luftstroms, der diese Manschette (17) durchquert, aufweist, wobei das Öffnen der Klappe durch die Steuerkarte (19) von dem höchsten Gehalt an Kohlendioxid abhängt, der in einem der Luftströme in dem Reiniger gemessen wird.

3. Luftreinigungssystem nach Anspruch 2, **dadurch gekennzeichnet, dass** es einen Sensor (21) aufweist, der den Verschmutzungsgrad der Luft, die von außen kommt, misst, wobei die Lufteinlassklappe (18) geeignet ist, um durch die Steuerkarte (19) geschlossen zu werden, wenn der Gehalt an Partikeln und/oder an VOC der Außenluft höher ist als der höchste Gehalt, der in einem der Einlassluftströme, die aus mindestens einem Raum des Gebäudes kommen, gemessen wurde.

4. Luftreinigungssystem nach Anspruch 3, **dadurch gekennzeichnet, dass** es ein Mittel zum Aussenden eines akustischen Signals und/oder Lichtsignals aufweist, das aktiviert wird, wenn der Gehalt an Partikeln und/oder an VOC der Außenluft höher ist als der höchste Gehalt, der in einem der Einlassluftströme, die aus mindestens einem Raum des Gebäudes kommen, gemessen wurde.

5. Luftreinigungssystem nach einem der Ansprüche 2 bis 4, **dadurch gekennzeichnet, dass** es einen Sensor aufweist, der die Temperatur der Außenluft misst, wobei die Lufteinlassklappe (18) geschlossen wird, wenn die Innentemperatur die Außentemperatur um einen bestimmten Wert überschreitet.

6. Luftreinigungssystem nach einem der Ansprüche 2 bis 5, **dadurch gekennzeichnet, dass** es eine Auslassmanschette (23) zum Ableiten eines Luftstroms aus dem Gebäude heraus und eine Klappe (24) zum Steuern der Durchflussmenge des Luftstroms, der diese Manschette durchquert, aufweist, wobei das Öffnen dieser Klappe (24) auf dieselbe Weise gesteuert wird, wie die Einlassklappe (18) zum Einführen des Luftstroms, der von außen kommt.

7. Luftreinigungssystem nach einem der Ansprüche 2 bis 5, **dadurch gekennzeichnet, dass** es einen Drucksensor zum Messen des Drucks im Inneren des Gebäudes, eine Auslassmanschette (23) zum Ableiten eines Luftstroms aus dem Gebäude heraus und eine Klappe (24) zum Steuern der Durchflussmenge des Luftstroms, der diese Manschette durchquert, aufweist, wobei das Öffnen dieser Klappe (24) in Abhängigkeit von dem Druck gesteuert wird, der in dem Gebäude gemessen wird.

8. Luftreinigungssystem nach einem der vorhergehenden Ansprüche, **dadurch gekennzeichnet, dass** es eine Steuerbox (19) aufweist, die das Schließen von mindestens einem Paar aus einer Eingangsklappe (11) und einer Ausgangsklappe (12) auslöst, die den Luftstrom steuern, der einen Raum des Gebäudes durchquert, wobei das Schließen durch die Eingabe eines Befehls eines Benutzers auf Ebene einer Schnittstelle (6) ausgelöst wird.

## Claims

1. An air purification system intended to equip a building, said system including an air purifier provided with a fan (16) coupled to at least one filter (7) to produce filtered air by reducing its level of microparticles or VOCs or other gases, and a plurality of pairs consisting of an inlet sleeve (9) and an outlet sleeve (10) traversed by an air flow propelled by said fan (16),
according to which said system comprises at least a plurality of assemblies each constituting a filtering loop and consisting of an outlet mouth (5) connected by a sheath (3) to one of said inlet sleeves for extracting air to be filtered from a room to be treated of said building towards the purifier and an air inlet mouth (4) connected by another duct (3) to one of said outlet sleeves to discharge into the building the air flow from said room filtered by the purifier so that the system operates as a closed circuit,
according to which said system includes pollution sensors (20) adapted to measure the level of pollution at each air flow entering the inlet sleeves (9) and a control card (19) adapted to trigger the opening of an inlet valve (11) controlling the air inlet at the inlet sleeve and of an outlet valve (12) controlling the air outlet at the outlet sleeve of the same pair, the opening of said inlet (11) and outlet (12) valves being proportional to the measured pollution level.
**characterised in that** said further includes a module adapted to control the rotation speed of the fan, the speed being proportional at least to the level of pollution measured by said sensors (20) and to the cumulative open section of all the inlet and outlet valves.

2. The air purification system according to claim 1, **characterised in that** it further includes an inlet sleeve (17) for introducing an air flow coming from outside the building, and a valve (18) for controlling the flow rate of the air flow passing through this sleeve (17), the opening of the valve by the control card (19) depending on the highest carbon dioxide level measured in one of the air flows entering the purifier.

3. The air purification system according to claim 2, **characterised in that** it includes a sensor (21) measuring the level of pollution of the air coming from the outside, the air inlet valve (18) being adapted to be closed by the control card (19) if the level of particles and/or VOCs in the outside air is higher than the highest level measured in one of the inlet air flows coming from at least one room of the building.

4. The air purification system according to claim 3, **characterised in that** it includes means for emitting an audible and/or light signal activated when the level of particles and/or VOCs in the outside air is higher than the highest level measured in one of the inlet air flows coming from at least one room of said building.

5. The air purification system according to any one of claims 2 to 4, **characterised in that** it includes a sensor measuring the temperature of the outside air, the air inlet valve (18) being closed if the inside temperature exceeds the outside temperature by a determined value.

6. The air purification system according to any one of claims 2 to 5, **characterised in that** it includes an outlet sleeve (23) for extracting an air flow towards the outside of the building, and a valve (24) for controlling the flow rate of the air flow passing through this sleeve, the opening of this valve (24) being controlled in the same way as the inlet valve (18) for introducing the air flow coming from the outside.

7. The air purification system according to any one of claims 2 to 5, **characterised in that** it includes a pressure sensor for measuring the pressure inside the building, an outlet sleeve (23) for extracting an air flow towards the outside of the building, and a valve (24) for controlling the flow rate of the air flow passing through this sleeve, the opening of this valve (24) being controlled according to the pressure measured in the building.

8. The air purification system according to any one of the preceding claims, **characterised in that** it includes a control casing (19) triggering the closing of at least one pair of an inlet valve (11) and an outlet valve (12) controlling the flow of air passing through a room of the building, the closing being triggered by the introduction of a control from a user at an interface (6).
